# EUROPEAN PATENT SPECIFICATION

(11) **EP 3 653 031 B1**
(45) Date of publication and mention of the grant of the patent: **28.04.2021**
(21) Application number: 18206352.9
(22) Date of filing: 14.11.2018
(51) Int. Cl.: A01B 21/08

(54) **AGRICULTURAL SOIL CULTIVATION DEVICE**
LANDWIRTSCHAFTLICHE BODENBEARBEITUNGSVORRICHTUNG
DISPOSITIF DE CULTURE DE TERRE AGRICOLE

(43) Date of publication of application: 20.05.2020
(73) Proprietor: Bednar FMT s.r.o., 190 17 Praha 9 (CZ)
(72) Inventor: Syrovatka, Pavel, 41301 Klenec (CZ); Kracik, Jan, 18000 Praha (CZ); Bednar, Vojtech,, 19017 Praha (CZ)
(74) Representative: Dadej, Leopold

(56) References cited:
- WO-A2-2012/079567
- CA-A1- 2 809 708
- FR-A- 1 100 370
- US-A- 5 080 178

## Description

### Technical field:

Agricultural soil cultivation device which uses working discs for its operation.

### Background:

There are many agricultural soil cultivation devices which use working discs for their operation, such solutions have been known since the 19^{th} century, e.g. patent document US632778 disclosing a device that uses a row of convex discs mounted to the central bar.

With advancing knowledge in the field of agricultural activities, it has been discovered that it is preferable to invert soil twice. Therefore, disc harrows were made using two rows of discs arranged behind each other. Convex discs of the first row were oriented with its convex side towards the different side than the rear row of discs. This solution, known, e.g. from patent document AT500249, cultivates soil along the whole operating width of the machine. Regarding the structural arrangement and orientation of working discs, uneven disc operation width occurs, which results in swerving or shifting sideways. Therefore, this leads to low quality soil cultivation and mechanical stress of the whole structure.

Thus the conception of the disc harrow was made, in which both rows of working discs are arranged up to the middle of the operating width with their convex side to one side and from the middle up to the other end with their convex side to the opposite side, so that the discs in the front row are always oriented with their convex side to a different side in comparison to the corresponding rear row discs. Such solution, which is known, for example, from patent document US1944275, eliminates the drawback of uneven operating width of discs and shifting of the device to a side. However, it brings about a new drawback characterized in presence of an uncultivated strip of soil in the central region of the working device.

Patent US8997886 discloses a known solution that partially eliminates both of the issues by moving the change of disc orientation from the center to the path of the towing vehicle; this solution, however, failed to eliminate the issues entirely, it just reduced their extent. However, in the narrow strip, double cultivation is not applied. This leads to uneven growth of crops in this partially uncultivated strip and eventually causes considerable economic losses.

Both issues were solved by different devices with increased number of working disc rows with their overlap in the central region. This solution is known, for example, from patent document CZ305807, which uses three rows of working discs, when the central row of discs covers the central region. However, a need arises to create an artificial gap between discs upon change of their orientation, or orientation of their convex sides respectively, both the in front row and in the rear row. Due to the presence of gaps an asymmetry appears between the left and the right side of each row. These asymmetries further cause uneven loading of discs from each side which needs to be compensated. Furthermore, this solution increases weight, dimensions, price and particularly the complexity of the whole construction of such devices.

Another solution of this issue is known from the document EP2651204. Of course, the construction arrangement of individual working discs is asymmetrical, which causes uneven working width of discs in the operating area, and thus different loading of individual discs, which may cause damage to the whole structure faster.

The documents WO 2012/079567 A2, CA 2 809 708 A1, FR 1 100 370 A, and US 5 080 178 A describe further known agricultural soil cultivation devices.

Therefore, the existing constructions include a strip of uncultivated soil, or eventually this strip of soil is cultivated just once. Although the Background refers to documents which present a disclosure being able to cultivate soil twice and without omitted areas, those disclosures have either uneven operating width, or their construction is too robust, complicated and demanding to produce.

### Summary of the Invention:

The solution to the technical problem is achieved by the subject-matter of independent claim 1, defining per se the invention. Particular embodiments of the invention are defined in the dependent claims. The mentioned drawbacks are at least partially eliminated by an agricultural soil cultivation device comprising a support frame, on which the front row of discs and the rear row of discs are mounted. The discs are mounted to the frame through tines, wherein the front row discs are oriented with their convex sides towards the central axis of the device and the rear row discs are oriented with their convex sides away from the central axis of the device. Vertical chords of the convex sides of the discs form an angle α with the perpendicular towards the horizontal plane, and horizontal chords form an angle β with the direction of travel of the device. Values of the angle α are in the range of 14° to 22°. In preferred embodiment the value of the angle is 18°. Values of the angle β are in the range of 14° to 22°. In preferred embodiment the value of the angle is 18°. Discs of the same orientation of each row are in the same distance. The front row discs located closest to the central axis are arranged on a separate middle tine. The advantage of the disclosure is characterized in a presence of the central row of discs with two discs mounted on the central tine. The central row is placed in between the front row and the rear row. Lines horizontal and perpendicular to the central axis of the device passing through centers of the central row discs offset each other by the length of the offset of the central discs, and the central row discs are oriented with their convex sides towards the central axis. Vertical chords of convex sides of central row discs form an angle -α with the perpendicular towards the horizontal plane and horizontal chords form an angle β with the direction of travel. Owing to the central row, the central region of soil is covered and evenly cultivated. The symmetrical solution of the construction further ensures an even operating width of the agricultural device. Thanks to this, potential turning of the agricultural device out of the direction of travel is minimized.

Another advantage of the agricultural soil cultivation device with working discs is characterized in identical shape of all working discs. Therefore, the discs are interchangeable and replaceable in case of a breakdown of any of them.

Individual rows may be placed in the same height. However, in a preferred embodiment the central row of discs is placed lower than the front row and the rear row.

The offset length of the central discs in the central row ranges between 20 mm and preferably 400 mm, in a preferred embodiment the offset length of the central discs is 210 mm. Preferably the construction of the agricultural soil cultivation device with working discs itself allows placement of the offset center of the central discs in the distance of 200 mm to 1000 mm from the rear row of discs. Preferably the distance of the front and rear row of discs then ranges between 960 mm and 1950 mm.

Different embodiments of the disclosure then allow either a one-part, or a two-part central tine of the central row. In a preferred embodiment, the centers of the front row discs lie along a single axis as well as the centers of the rear row discs. The advantage of this embodiment is based on an even operating width of the device.

### Brief description of the drawings:

The object of the present invention is further illustrated by means of examples of its implementation, which are described with the use of the accompanied drawings, in which:
Fig. 1 - is a bottom view of the overall structure of the agricultural soil cultivation device with working discs;
Fig. 2 - is a bottom view of the arrangement of working discs without the structure;
Fig. 3 - is a bottom view of the central row discs;
Fig. 4 - is a bottom view of the front row discs placed on the central tine;
Fig. 5 - shows a rear view of the method of mounting of a disc of the left rear row, or the right front row;
Fig. 6 - shows a rear view of the method of mounting of a disc of the left front row, or the right rear row;
Fig. 7 - shows a rear view of front row discs placed on the central tine;
Fig. 8 - shows a rear view of central row discs arranged on the central tine of the central row.

### Exemplary embodiments of the technical solution:

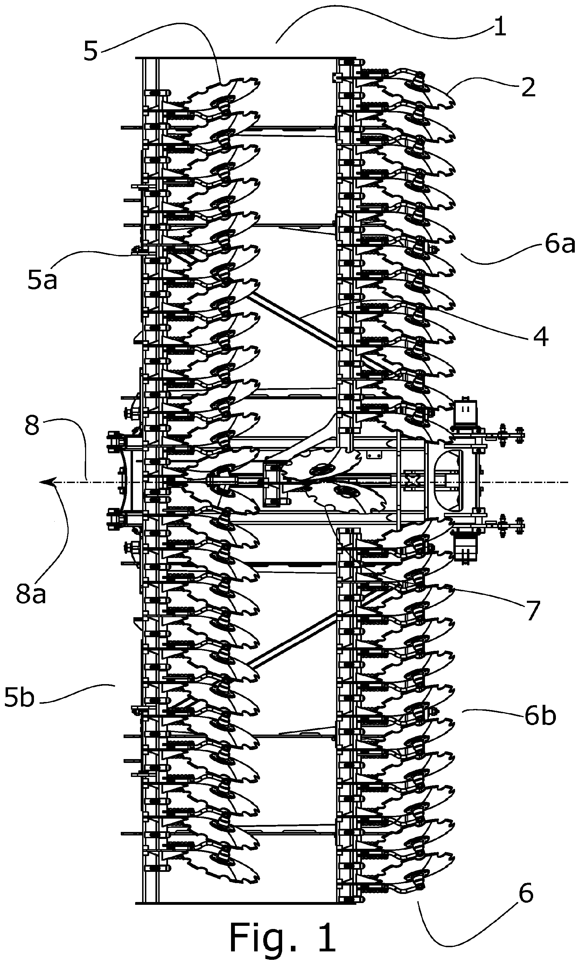

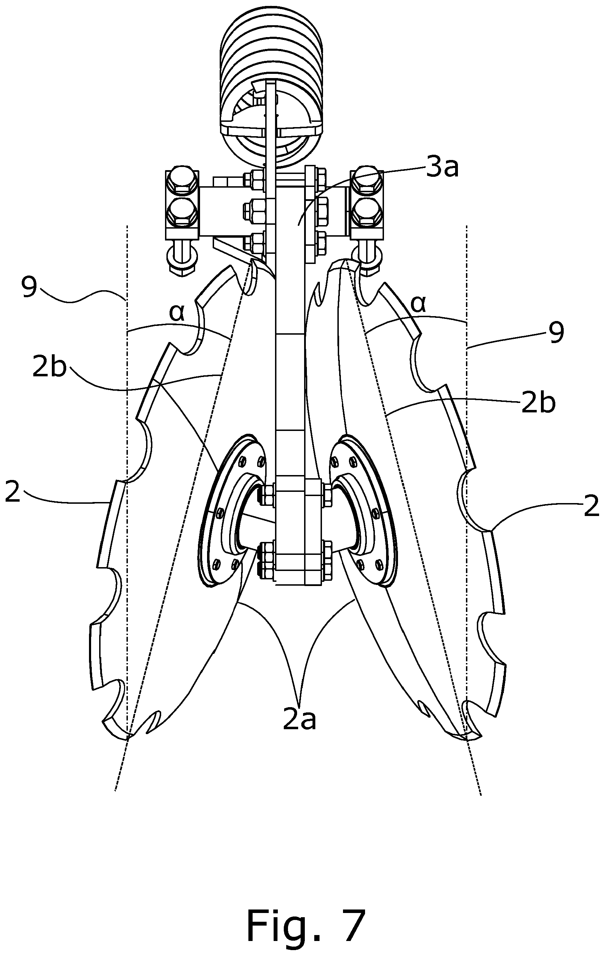

Agricultural soil cultivation device 1 shown in Fig. 1, using working discs 2 for its operation, comprises a support frame 4, on which the front row 5 of discs 2 and the rear row 6 of discs 2 are mounted. The distance of the front row 5 and the rear row 6 of working discs 2 ranges between 960 mm and 1950 mm. Each row 5 and 6 consists of a left and a right part. Individual working discs 2 are then mounted to the frame 4 by means of a tine 3. Each of the working discs 2 of the front row 5 and the rear row 6 is mounted to a given row through its own tine 3 with the exception of two discs 2 of the front row 5, which are the closest to the central axis 8. These two discs 2 are placed on one and the same central tine 3a of the front row 5, see Fig. 7. The distance of intervals of individual working discs 2 on each part of each row 5, 6 is then identical.

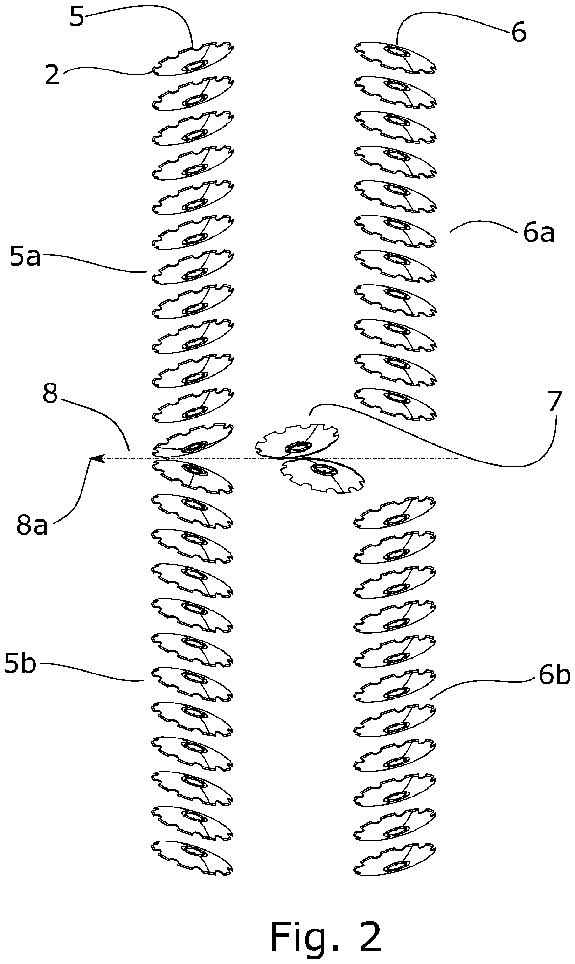

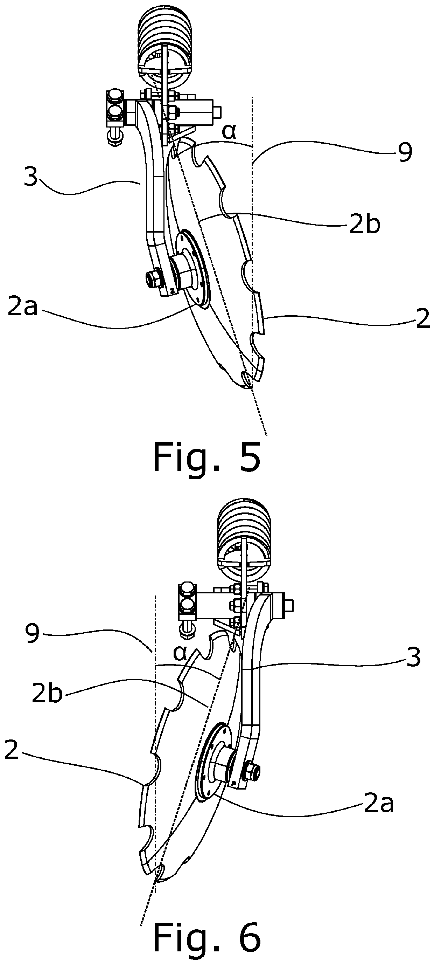

Fig. 1 and Fig. 2 show orientation of the working discs, where working discs 2 of the front row 5 are oriented with their convex sides 2a towards the central axis 8 of the device 1, and further, working discs 2 of the rear row 6 are oriented with their convex sides 2a away from the central axis 8 of the device. Fig. 5 and 6 illustrate a mechanism of mounting of a working disc 2 to a tine 3, specifically then Fig. 5 shows a method of mounting of a disc 2 of the left part 6a of the rear row, or the right part 5b of the front row respectively, and Fig. 6 shows the method of mounting of a disc 2 of the left part 5a of the front row, or the right part 6b of the rear row respectively. Furthermore, the chord 2b of a disc 2 is illustrated therein. The chord 2b is considered the connecting line of two of the most distant opposite points at the edge of a working disc 2. Vertical chords 2b of the working discs 2 of the front row 5 and the rear row 6 form an angle α with the perpendicular 9 towards the horizontal plane, the value of which falls within the range of 14° to 22°; in an exemplary embodiment of the invention the value of the angle α is 18°. The working discs 2 are further oriented towards the direction 8a of travel of the agricultural device 1, or eventually their horizontal chords 2b form an angle β with the central axis 8 of the device 2, value of which falls within the range of 14° to 22°; in an exemplary embodiment of the invention the value of the angle β is 18°.

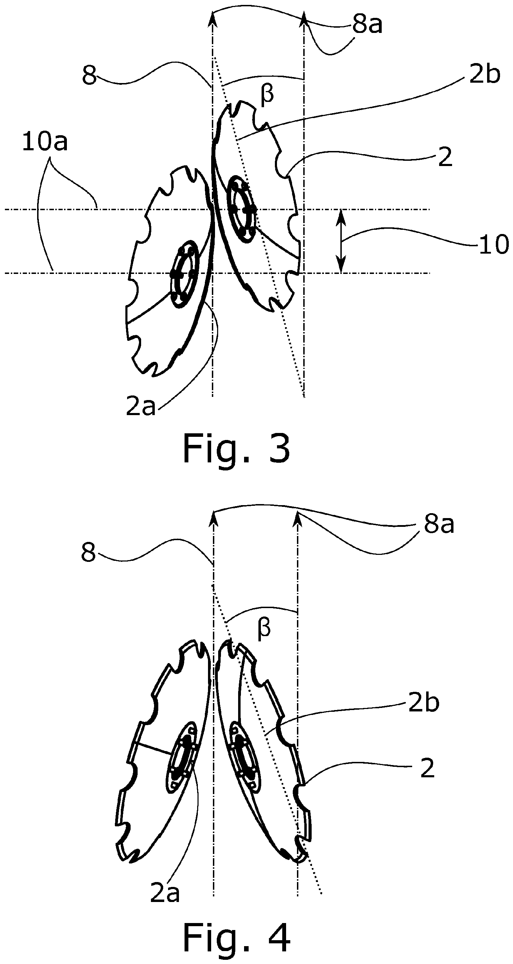

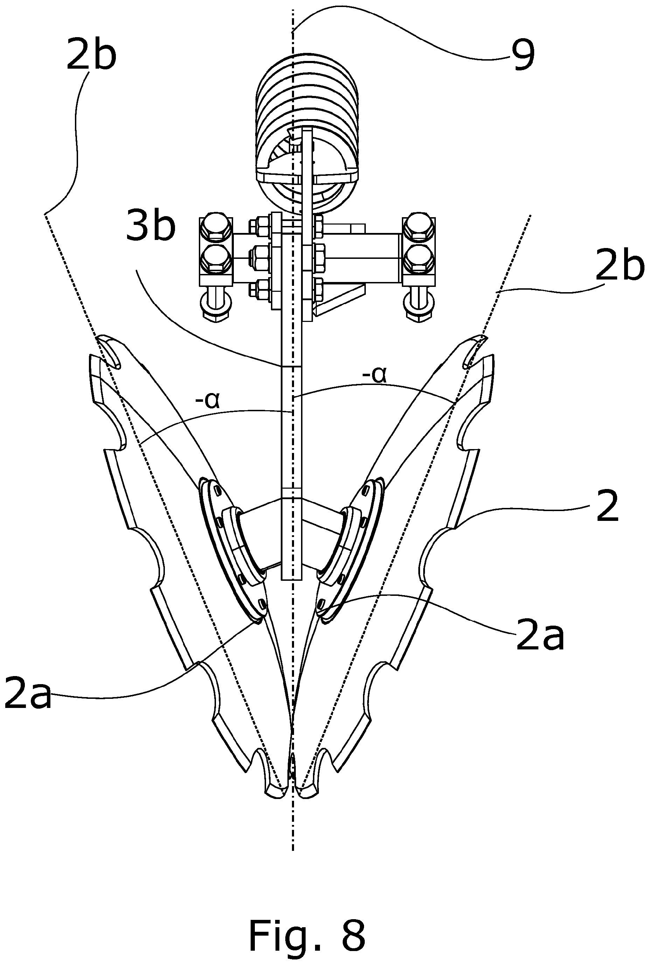

As shown in Figs. 1 and 2, the agricultural soil cultivation device 1 further includes the central row 7 of discs 2, which is placed in between the front row 5 of discs 2 and the rear row 6 of discs 2. The central row 7 of discs 2 comprises in an exemplary embodiment of the invention a single central tine 3b, on which two working discs 2, shape-identical with other working discs 2, are mounted, see Fig. 8. Lines 10a horizontal and perpendicular to the central axis 8 of the device 1 passing through centers of these two central discs 2 offset each other by the length of the offset 10 of the central discs 2 , see Fig. 3. The value of this offset 10 falls within the range of 20 mm to 400 mm, in an exemplary embodiment of the invention the value of the offset 10 length of the central discs is 210 mm. Discs 2 of the central row 7 are oriented with their convex sides 2a towards the central axis 8. Discs 2 of the central row 7 are further oriented towards the direction 8a of travel of the agricultural device 1, or eventually their horizontal chords 2b form an angle β with the central axis 8 of the device 1, the value of which falls within the range of 14° to 22°; in an exemplary embodiment of the invention the value of angle β is 18°. Vertical chords 2b of the discs 2 of the central row 7 of the discs 2 form an angle α with the perpendicular 9 towards the horizontal plane, the value of which corresponds to the negative value of the angle α formed by chords 2b of discs 2 of the front row 5 and the rear row 6 with the perpendicular 9 towards the plane of cultivated soil. Discs 2 of the central row 7 are then, in relation to the soil, oriented in opposite direction to discs 2 of the front row 5 and the rear row 6.

The central row 7 of discs 2 is arranged in between the front row 5 of discs 2 and the rear row 6 of discs 2 in such way that the center of the offset 10 of the central discs 2 is spaced from the rear row 6 by a length ranging between 200 mm and 1000 mm.

As shown in Fig. 1 and Fig. 2, in exemplary embodiment of the invention, the centers of discs 2 of the front row 5 lie along a single axis as well as the centers of discs 2 of the rear row 6 lie along a single axis.

In possible embodiments of the invention different rows 5, 6 and 7 of discs 2 may have different travel height. In an exemplary embodiment of the invention, the rear row 6 and the front row 5 of discs are in the same level and the central row 7 of discs is placed 1 cm lower.

Individual discs 2 of all rows 5, 6 and 7 are of identical shape and interchangeable. In an exemplary embodiment of the invention, the discs 2 of the central row 7 somewhat vary, namely by the mounting mechanism the central tine 3b. The discs 2 of the central row 7 can thus be mounted on any other tine 3, whereas discs 2 of other rows 5, 6 cannot be mounted on the central tine 3b of the central row 7 due to structural constraints.

There are possible embodiments of the invention in which the central tine consists of one part or two parts.

### Industrial applicability:

The device accordance to the present disclosure may be used for soil cultivation with reduced production and energy requirements while maintaining high accuracy of the cultivation.

### List of reference signs

1 - soil cultivation device
2 - working discs
2a - working disc convex side
2b - working disc chord
3 - tine
3a - central tine of the front row
3b - central tine of the central row
4 - support frame
5 - front row
5a - left part of the front row
5b - right part of the front row
6 - rear row
6a - left part of the rear row
6b - right part of the rear row
7 - central row
8 - central axis of the device
8a - direction of travel of the device
9 - perpendicular to the plane of cultivated land
10 - central discs offset
10a - line passing through the center of the front row disc

## Claims

1. An agricultural soil cultivation device (1) comprising a support frame (4), on which a front row (5) of at least six discs (2) and a rear row (6) of at least six discs (2) is mounted, wherein the discs (2) are of a disc shape with one convex side (2a) and mounted to the frame (4) by means of tines (3), wherein the discs (2) of the front row (5) are oriented with their convex sides (2a) towards the central axis (8) of the device (1) and the discs (2) of the rear row (6) are oriented with their convex sides (2a) away from the central axis (8) of the operating width, and wherein vertical chords (2b) of the discs (2) form an angle α with the perpendicular (9) towards the horizontal plane ranging from 14° to 22°, and horizontal chords (2b) of the discs form an angle β with the direction (8a) of travel of the device (1) ranging from 14° to 22°, and wherein the discs (2) of the same orientation of each row (5), (6) are in the same distance, the discs (2) of the front row (5) located the closest to the central axis (8) are arranged on a separate central tine (3a) of the front row, **characterized in that** the device (1) further comprises a central row (7) of discs with at least two discs (2) mounted on a central tine (3b) of the central row arranged in between the front row (5) and the rear row (6), wherein lines (10a), horizontal and perpendicular to the central axis (8) of the device (1), passing through the center of the discs (2) of the central row (7), offset with each other by the length of the offset (10) of the central discs (2) by at least 20 mm, and the discs (2) of the central row (7) are oriented with their convex sides (2a) towards the central axis (8) of the device (1), wherein the vertical chords (2b) of the discs of the central row (7) form an angle -α with the perpendicular (9) to the horizontal plane, and the horizontal chords (2b) of the discs (2) form an angle β with the direction (8a) of travel of the device (1).

2. The agricultural soil cultivation device (1) according to any of the previous claims **characterized in that** rotatable working discs (2) have identical shapes and are interchangeable.

3. The agricultural soil cultivation device (1) according to any of the previous claims **characterized in that** the central row (7) of discs is lower than the front row (5) and the rear row (6) of discs (2).

4. The agricultural soil cultivation device (1) according to any of the previous claims **characterized in that** the length of the offset (10) of the central discs (2) is 210 mm.

5. The agricultural soil cultivation device (1) according to any of the previous claims **characterized in that** the distance of the offset (10) center of the central discs (2) from the rear row (6) of discs (2) ranges between 200 mm and 1000 mm.

6. The agricultural soil cultivation device (1) according to any of the previous claims **characterized in that** the distance of the front row (5) of discs (2) and the rear row (6) of discs (2) ranges between 960 mm and 1950 mm.

7. The agricultural soil cultivation device (1) according to any of the previous claims **characterized in that** the size of the angle α between the vertical chord (2b) of the discs (2) and the perpendicular (9) towards the horizontal plane is 18°.

8. The agricultural soil cultivation device (1) according to any of the previous claims **characterized in that** the size of the angle β between the horizontal chord (2b) of the discs (2) and the direction (8a) of travel of the device is 18°.

9. The agricultural soil cultivation device (1) according to any of the previous claims **characterized in that** the centers of discs (2) of the front row (5) lie along the same axis and that the centers of discs (2) of the rear row (6) lie along the same axis.

10. The agricultural soil cultivation device (1) according to any of the previous claims **characterized in that** the central tine (3b) of the central row has two parts.

11. The agricultural soil cultivation device (1) according to any of the claims 1 to 9 **characterized in that** the central tine (3b) of the central row has a single part.

## Patentansprüche

1. Eine landwirtschaftliche Bodenbearbeitungsvorrichtung (1) mit einem Tragrahmen (4), an dem eine vordere Reihe (5) von mindestens sechs Scheiben (2) und eine hintere Reihe (6) von mindestens sechs Scheiben (2) gelagert ist, wobei die Scheiben (2) mit einer konvexen Seite (2a) scheibenförmig ausgebildet sind und mittels Zinken (3) an dem Rahmen (4) befestigt sind, wobei die Scheiben (2) der vorderen Reihe (5) mit ihren konvexen Seiten (2a) zur Mittelachse (8) der Vorrichtung (1) orientiert sind und die Scheiben (2) der hinteren Reihe (6) mit ihren konvexen Seiten (2a) von der Mittelachse (8) der Arbeitsbreite orientiert sind, und wobei vertikale Sehnen (2b) der Scheiben (2) einen Winkel α mit der Senkrechten (9) in Richtung der horizontalen Ebene im Bereich von 14° bis 22° einschließen und horizontale Sehnen (2b) der Scheiben einen Winkel β mit der Richtung (8a) der Bewegung der Vorrichtung (1) im Bereich von 14° bis 22° einschließen, und wobei die Scheiben (2) gleicher Orientierung jeder Reihe (5), (6) im gleichen Abstand zueinander angeordnet sind, die Scheiben (2) der vorderen Reihe (5), die am nächsten zur Mittelachse (8) angeordnet ist, auf einem separaten zentralen Zinken (3a) angeordnet sind, **dadurch gekennzeichnet, dass** die Vorrichtung (1) ferner eine mittlere Reihe (7) von Scheiben aufweist, mit mindestens zwei Scheiben (2), die auf einem zentralen Zinken (3b) der mittleren Reihe gelagert sind, die zwischen der vorderen Reihe (5) und der hinteren Reihe (6) angeordnet ist, wobei Linien (10a), horizontal und senkrecht zur Mittelachse (8) der Vorrichtung (1), die durch die Mitte der Scheiben (2) der mittleren Reihe (7) hindurchgeführt sind, durch die Länge des Versatzes (10) der mittleren Scheiben (2) um mindestens 20 mm gegeneinander versetzt sind, und die Scheiben (2) der mittleren Reihe (7) mit ihren konvexen Seiten (2a) zur Mittelachse (8) der Vorrichtung (1) orientiert sind, wobei die vertikalen Sehnen (2b) der Scheiben der mittleren Reihe (7) mit der Senkrechten (9) zur horizontalen Ebene einen Winkel -α einschließen und die horizontalen Sehnen (2b) der Scheiben (2) mit der Richtung (8a) der Bewegung der Vorrichtung (1) einen Winkel β einschließen.

2. Die landwirtschaftliche Bodenbearbeitungsvorrichtung (1) nach einem der vorhergehenden Ansprüche, **dadurch gekennzeichnet, dass** drehbare Arbeitsscheiben (2) identische Formen aufweisen und austauschbar sind.

3. Die landwirtschaftliche Bodenbearbeitungsvorrichtung (1) nach einem der vorhergehenden Ansprüche, **dadurch gekennzeichnet, dass** die mittlere Reihe (7) der Scheiben niedriger ist als die vordere Reihe (5) und die hintere Reihe (6) der Scheiben (2).

4. Die landwirtschaftliche Bodenbearbeitungsvorrichtung (1) nach einem der vorhergehenden Ansprüche, **dadurch gekennzeichnet, dass** die Länge des Versatzes (10) der mittleren Scheiben (2) 210 mm beträgt.

5. Die landwirtschaftliche Bodenbearbeitungsvorrichtung (1) nach einem der vorhergehenden Ansprüche, **dadurch gekennzeichnet, dass** der Abstand der Mitte des Versatzes (10) der mittleren Scheiben (2) von der hinteren Reihe (6) der Scheiben (2) zwischen 200 mm und 1000 mm liegt.

6. Die landwirtschaftliche Bodenbearbeitungsvorrichtung (1) nach einem der vorhergehenden Ansprüche, **dadurch gekennzeichnet, dass** der Abstand zwischen den Mitten der Scheiben (2) der vorderen Reihe (5) und den Mitten der Scheiben (2) der hinteren Reihe (6) zwischen 960 mm und 1950 mm liegt.

7. Die landwirtschaftliche Bodenbearbeitungsvorrichtung (1) nach einem der vorhergehenden Ansprüche, **dadurch gekennzeichnet, dass** die Größe des Winkels α zwischen der vertikalen Sehne (2b) der Scheiben (2) und der Senkrechten (9) zur horizontalen Ebene 18° beträgt.

8. Die landwirtschaftliche Bodenbearbeitungsvorrichtung (1) nach einem der vorhergehenden Ansprüche, **dadurch gekennzeichnet, dass** die Größe des Winkels β zwischen der horizontalen Sehne (2b) der Scheiben (2) und der Richtung (8a) der Bewegung der Vorrichtung 18° beträgt.

9. Die landwirtschaftliche Bodenbearbeitungsvorrichtung (1) nach einem der vorhergehenden Ansprüche, **dadurch gekennzeichnet, dass** die Mitten der Scheiben (2) der vorderen Reihe (5) entlang derselben Achse liegen und dass die Mitten der Scheiben (2) der hinteren Reihe (6) entlang derselben Achse liegen.

10. Die landwirtschaftliche Bodenbearbeitungsvorrichtung (1) nach einem der vorhergehenden Ansprüche, **dadurch gekennzeichnet, dass** der zentrale Zinken (3b) der mittleren Reihe zwei Teile aufweist.

11. Die landwirtschaftliche Bodenbearbeitungsvorrichtung (1) nach einem der Ansprüche 1 bis 9, **dadurch gekennzeichnet, dass** der zentrale Zinken (3b) der mittleren Reihe einteilig ausgebildet ist.

## Revendications

1. Un dispositif (1) de culture de terre agricole, comprenant une trame de support (4), sur laquelle une rangée avant (5) d'au moins six disques (2) et une rangée arrière (6) d'au moins six disques (2) est montée, où les disques (2) sont en forme de disque avec un côté convexe (2a) et montés sur la trame (4) au moyen de dents (3), où les disques (2) de la rangée avant (5) sont orientés avec leurs côtés convexes (2a) vers l'axe central (8) du dispositif (1) et les disques (2) de la rangée arrière (6) sont orientés avec leurs côtés convexes (2a) à l'opposé de l'axe central (8) de la largeur de fonctionnement, et où des cordes verticales (2b) des disques (2) forment un angle α avec la perpendiculaire (9) vers le plan horizontal allant de 14° à 22°, et des cordes horizontales (2b) des disques forment un angle β avec la direction (8a) de déplacement du dispositif (1) allant de 14° à 22°, et où les disques (2) de la même orientation de chaque rangée (5), (6) sont à la même distance, les disques (2) de la rangée avant (5) situés le plus près de l'axe central (8) sont disposés sur une dent centrale séparée (3a), **caractérisé en ce que** le dispositif (1) comprend en outre une rangée centrale (7) de disques avec au moins deux disques (2) montés sur une dent centrale (3b) de la rangée centrale disposée entre la rangée avant (5) et la rangée arrière (6), où des lignes (10a), horizontales et perpendiculaires à l'axe central (8) du dispositif (1), passant par le centre des disques (2) de la rangée centrale (7), se décalent l'une par rapport à l'autre par la longueur du décalage (10) des disques centraux (2) d'au moins 20 mm, et les disques (2) de la rangée centrale (7) sont orientés avec leurs côtés convexes (2a) vers l'axe central (8) du dispositif (1), où les cordes verticales (2b) des disques de la rangée centrale (7) forment un angle -α avec la perpendiculaire (9) vers le plan horizontal, et les cordes horizontales (2b) des disques (2) forment un angle β avec la direction (8a) de déplacement du dispositif (1).

2. Le dispositif de culture de terre agricole (1) selon l'une quelconque des revendications précédentes, **caractérisé en ce que** des disques rotatifs de fonctionnement (2) ont des formes identiques et sont interchangeables.

3. Le dispositif de culture de terre agricole (1) selon l'une quelconque des revendications précédentes, **caractérisé en ce que** la rangée centrale (7) de disques est inférieure à la rangée avant (5) et à la rangée arrière (6) de disques (2).

4. Le dispositif de culture de terre agricole (1) selon l'une quelconque des revendications précédentes, **caractérisé en ce que** la longueur du décalage (10) des disques centraux (2) est de 210 mm.

5. Le dispositif de culture de terre agricole (1) selon l'une quelconque des revendications précédentes, **caractérisé en ce que** la distance du centre de décalage (10) des disques centraux (2) à partir des disques (2) de la rangée arrière (6) est comprise entre 200 mm et 1000 mm.

6. Le dispositif de culture de terre agricole (1) selon l'une quelconque des revendications précédentes, **caractérisé en ce que** la distance entre les centres des disques (2) de la rangée avant (5) et les centres des disques (2) de la rangée arrière (6) est comprise entre 960 mm et 1950 mm.

7. Le dispositif de culture de terre agricole (1) selon l'une quelconque des revendications précédentes, **caractérisé en ce que** la taille de l'angle α entre la corde verticale (2b) des disques (2) et la perpendiculaire (9) vers le plan horizontal est de 18°.

8. Le dispositif de culture de terre agricole (1) selon l'une quelconque des revendications précédentes, **caractérisé en ce que** la taille de l'angle β entre la corde horizontale (2b) des disques (2) et la direction (8a) de déplacement du dispositif est de 18°.

9. Le dispositif de culture de terre agricole (1) selon l'une quelconque des revendications précédentes, **caractérisé en ce que** les centres de disques (2) de la rangée avant (5) se trouvent le long du même axe et que les centres de disques (2) de la rangée arrière (6) se trouvent le long du même axe.

10. Le dispositif de culture de terre agricole (1) selon l'une quelconque des revendications précédentes, **caractérisé en ce que** la dent centrale (3b) de la rangée centrale a deux parties.

11. Le dispositif de culture de terre agricole (1) selon l'une quelconque des revendications 1 à 9, **caractérisé en ce que** la dent centrale (3b) de la rangée centrale a une partie unique.
